# EUROPÄISCHE PATENTSCHRIFT

(11) **EP 3 329 528 B1**
(45) Veröffentlichungstag und Bekanntmachung des Hinweises auf die Patenterteilung: **23.09.2020**
(21) Anmeldenummer: 16745456.0
(22) Anmeldetag: 28.07.2016
(51) Int. Cl.: H01M 2/12, F16K 17/19, F16K 17/26

(54) **DRUCKAUSGLEICHSVORRICHTUNG**
PRESSURE EQUALISING DEVICE
DISPOSITIF DE COMPENSATION DE PRESSION

(30) Priorität: 28.07.2015 DE 102015214256
(43) Veröffentlichungstag der Anmeldung: 06.06.2018
(73) Patentinhaber: Bimed Teknik Aletler Sanayi ve Ticaret A.S., 34900 Büyükcekmece Istanbul (TR)
(72) Erfinder: ALBUKREK, Yilmaz, 34149 Istanbul (TR); KEMPF, Klaus, 70563 Stuttgart (DE)
(74) Vertreter: DREISS Patentanwälte PartG mbB
(86) Internationale Anmeldenummer: PCT/EP2016/068026
(87) Internationale Veröffentlichungsnummer: WO 2017/017199

(56) Entgegenhaltungen:
- DE-A1-102010 051 687
- DE-A1-102013 213 909
- DE-A1-102014 217 977
- US-A- 4 052 534
- US-A1- 2005 208 369

## Beschreibung

Die Erfindung betrifft eine Druckausgleichsvorrichtung zum Ausgleichen eines Innendrucks in einem Gehäuse einer elektrochemischen Vorrichtung, umfassend mindestens eine gaspermeable Membran zum Gasaustausch zwischen einem Innenraum des Gehäuses und einer Umgebung der elektrochemischen Vorrichtung.

Eine solche Vorrichtung dient üblicherweise zum Druckausgleich innerhalb einer Batterie/eines Akkus. Der Innendruck eines geschlossenen Batteriesystems soll dem Außendruck angepasst werden, damit das Batteriegehäuse keinen Schaden nimmt. Der Innendruck kann größer oder kleiner als der Außendruck sein, je nach Einsatzbereich der Batterie (atmosphärischer Druckunterschied bei bewegter Batterie, Druckunterschied durch Temperaturunterschied).

Eine Druckausgleichsvorrichtung ist aus der EP 2 554 882 A1 bekannt. Bei der bekannten Druckausgleichsvorrichtung ist es vorgesehen, dass sich die gaspermeable Membran in Abhängigkeit eines Gehäuseinnendrucks verformt und bei Überschreitung eines Grenzdrucks durch die Spitze eines Notentgasungsstachels zerstört wird. Hierfür müssen die Abmessungen und das Material der Membran, die Geometrie des Notentgasungsstachels und dessen Abstand zu der Membran jeweils genau ausgelegt und insgesamt exakt aufeinander abgestimmt sein, damit die Membran bei Unterschreitung des Grenzdrucks intakt bleibt und sich bei Überschreitung des Grenzdrucks gerade so verformt, dass der Notentgasungsstachel sie zerstört.

Aus der DE 10 2013 213 909 A1 ist eine Vorrichtung zur Regulierung eines Innendrucks in einem eine Batteriezelle umgebenden Gehäuse bekannt. Diese Vorrichtung weist ein Kugelrückschlagventil und eine von diesem Ventil separate Membran auf. Aus der US 4 052 534 A ist eine Druckausgleichsvorrichtung mit einer geschlitzten Membran bekannt.

Hiervon ausgehend liegt der vorliegenden Erfindung die Aufgabe zugrunde, eine Druckausgleichsvorrichtung bereitzustellen, welche in einfacher Weise auf einen vorgegebenen Grenzinnendruck hin ausgelegt werden kann. Diese Aufgabe wird durch eine Druckausgleichsvorrichtung mit den Merkmalen des Patentanspruchs 1 gelöst.

Erfindungsgemäß ist ein Ventilkörper vorgesehen, der bei Überschreitung eines Grenzinnendrucks aus einer Ruhelage in eine Gebrauchslage überführt wird. Hierdurch hebt der Ventilkörper von einem Ventilsitz ab und gibt zwischen dem Ventilsitz und dem abgehobenen Ventilkörper einen Strömungspfad frei. Dieser Strömungspfad ermöglicht die rasche Abführung großer Gasmengen.

Im Normalbetrieb der Batterie liegt der Ventilkörper in seiner Ruhelage am Ventilsitz an; hierdurch ist der zuvor genannte Strömungspfad verschlossen. Der Ventilkörper umfasst eine mittels der gaspermeablen Membran verschlossene Gasdurchströmungsöffnung. Auf diese Weise wird, während sich der Ventilkörper in seiner Ruhelage befindet, ein Gasaustausch ermöglicht.

Bei einer erfindungsgemäßen Druckausgleichsvorrichtung ist es nicht erforderlich, dass die gaspermeable Membran bei Überschreitung eines Grenzinnendrucks zerstört wird. Dies ermöglicht es, die gaspermeable Membran im Hinblick auf eine möglichst hohe Gasaustauschfähigkeit hin zu optimieren. Darüber hinaus kann die gaspermeable Membran auch vergleichsweise robust ausgeführt werden, sodass sich die Handhabung der Druckausgleichsvorrichtung vereinfacht.

Die Auslegung der Druckausgleichsvorrichtung im Hinblick auf einen vorgegebenen Grenzinnendruck kann also von den Abmessungen und dem Material der gaspermeablen Membran unabhängig erfolgen, da diese keine definierten Verformungseigenschaften aufweisen muss. Ferner ist es nicht erforderlich, einen genau positionierten Notentgasungsstachel vorzusehen.

Erfindungsgemäß ist es möglich, im Normalbetrieb einer Batterie hohe Gasaustauschvolumina zu ermöglichen und gleichzeitig für den Fall eines plötzlichen, explosionsartigen Anstiegs des Innendrucks in der Batterie (bspw. bedingt durch die Explosion einer defekten Batteriezelle) eine große Menge Gas innerhalb kürzester Zeit abzuführen und die Gefahr einer Explosion der gesamten Batterie erheblich zu verringern.

Die erfindungsgemäße Druckausgleichsvorrichtung hat den Vorteil, dass die Überschreitung eines Grenzinnendrucks nicht mit einer Zerstörung oder einem Absprengen von Bauteilen oder Teilen davon einhergeht. Auf diese Weise wird die Umgebung der Druckausgleichsvorrichtung vor Beschädigungen geschützt, ohne dass hierfür Sicherungseinrichtungen vorgesehen seien müssen, welche ggf. eine rasche Abfuhr großer Gasmengen behindern könnten.

Erfindungsgemäß ist vorgesehen, dass der Ventilköper eine vom Innendruck beaufschlagte Ventilfläche aufweist und dass die Ventilfläche zumindest anteilig durch eine Oberfläche der gaspermeablen Membran gebildet ist. Auf diese Weise ist es möglich, zumindest einen Teil der Ventilfläche zur Anordnung der gaspermeablen Membran zu verwenden. Je größer dabei der Anteil der gaspermeablen Membran an der Ventilfläche ist, desto größer ist ein bezogen auf eine bestimmte Ventilkörpergröße bereitstellbarer Gasdurchströmungsquerschnitt. Dementsprechend ist es besonders bevorzugt, wenn die Ventilfläche vollständig oder im Wesentlichen vollständig durch die gaspermeable Membran gebildet ist.

Zur Erhöhung eines Gasdurchströmungsquerschnitts ist es auch bevorzugt, wenn sich die gaspermeable Membran in einer Membranebene erstreckt, welche zu einer Bewegungsachse des Ventilkörpers liegt, insbesondere senkrecht, verläuft.

Eine kompakte Bauform bei gleichzeitig möglichst großem Gasdurchströmungsquerschnitt ergibt sich, wenn die gaspermeable Membran und die Bewegungsachse relativ zueinander konzentrisch angeordnet sind.

Es ist denkbar, dass der Ventilkörper unter Verwendung einer zerstörbaren Verbindung an dem Ventilsitz gehalten ist, und dass diese Verbindung versagt, wenn der Grenzinnendruck überschritten wird. Bevorzugt ist es jedoch, dass die Druckausgleichsvorrichtung eine dem Innendruck entgegenwirkende Krafterzeugungseinrichtung aufweist, welche den Ventilkörper, sofern der Grenzinnendruck nicht überschritten wird, in der Ruhelage hält. Bei einer solchen Krafterzeugungseinrichtung handelt es sich insbesondere um eine Feder, welche mit dem Ventilkörper zusammenwirkt und diesen in Richtung auf den Ventilsitz drückt. Dies hat den Vorteil, dass der Ventilkörper mehrfach betätigbar ist. Dies ist besonders vorteilhaft, wenn die gaspermeable Membran so robust ausgelegt ist, dass bei Überschreitung des Grenzinnendrucks lediglich der Ventilkörper in die Gebrauchslage überführt wird, die gaspermeable Membran jedoch dabei nicht zerstört wird. Dies eröffnet die Möglichkeit, eine Druckausgleichsvorrichtung vorzusehen, welche wiederverwendbar ist und eine mehrfache Abführung großer Gasmengen bei Überschreitung eines Grenzinnendrucks ermöglicht.

Zur einfachen Montage der Druckausgleichsvorrichtung an einem Gehäuse einer elektrochemischen Vorrichtung ist es bevorzugt, wenn die Druckausgleichsvorrichtung einen Gehäuseeinsatz aufweist, der an oder in einer Öffnung des Gehäuses der elektrochemischen Vorrichtung befestigbar ist.

Ein solcher Gehäuseeinsatz weist vorzugsweise einen Innenraum auf, der zur Anordnung des Ventilkörpers und der mit dem Ventilkörper verbundenen gaspermeablen Membran dient.

Die erfindungsgemäße Druckausgleichsvorrichtung ermöglicht es, in der Ruhelage des Ventilkörpers Gas entlang eines Gasaustauschpfads zu führen und in der Gebrauchslage des Ventilkörpers Gas entlang eines vom Gasaustauschpfad abweichenden Strömungspfad zu führen. Somit können unterschiedliche Pfade bereitgestellt werden, welche jeweils im Hinblick auf den Normalbetrieb der Druckausgleichsvorrichtung (Gasaustauschpfad) und im Hinblick auf den Notbetrieb der Druckausgleichsvorrichtung (Strömungspfad) optimiert werden können.

Erfindungsgemäß verläuft der Strömungspfad, der während des Notbetriebs der Druckausgleichsvorrichtung aktiv ist, um den Ventilköper herum.

Weitere Merkmale und Vorteile der Erfindung sind Gegenstand der nachfolgenden Beschreibung und der zeichnerischen Darstellung eines bevorzugten Ausführungsbeispiels.

In den Zeichnungen zeigen:
- Fig. 1: eine Seitenansicht einer Ausführungsform einer Druckausgleichsvorrichtung, mit einem Ventilkörper in der Ruhelage; und
- Fig. 2: eine Seitenansicht der Druckausgleichsvorrichtung gemäß Fig. 1, mit dem Ventilkörper in der Gebrauchslage.

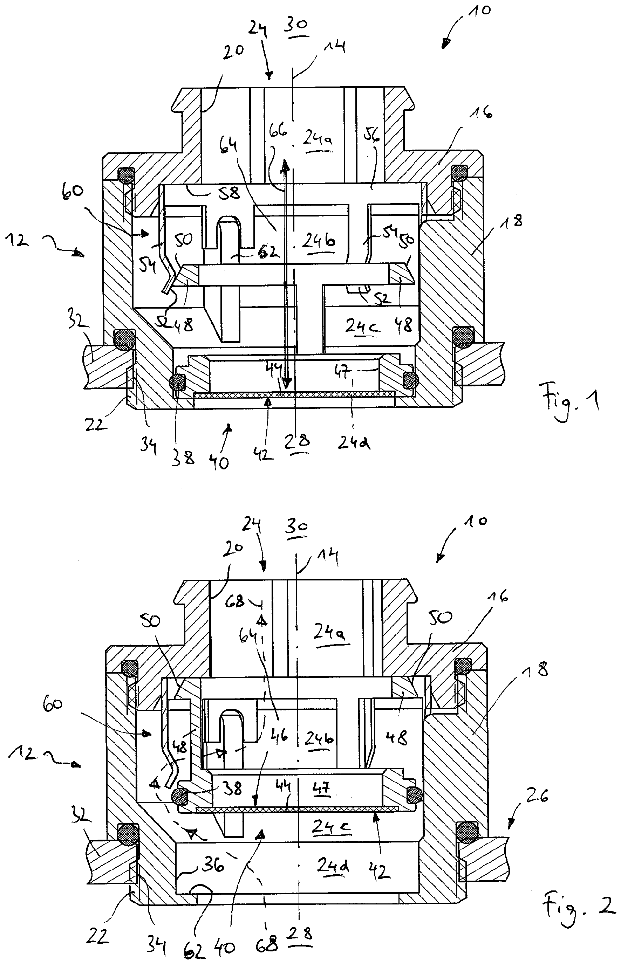

Figuren 1 und 2 zeigen eine Ausführungsform einer insgesamt mit dem Bezugszeichen 10 bezeichneten Druckausgleichseinrichtung 10 mit einem Gehäuseeinsatz 12. Der Gehäuseeinsatz 12 erstreckt sich längs einer zentralen Achse 14 zwischen einem Deckelabschnitt 16 und einem Montageabschnitt 18.

Der Deckelabschnitt 16 weist mindestens eine Gasdurchtrittsöffnung 20 auf. Der Montageabschnitt 18 weist einen Einpressabschnitt oder Gewindeabschnitt 22 auf.

Der Gehäuseeinsatz 12 weist ferner einen sich längs der zentralen Achse 14 erstreckenden Innenraum 24 mit mehreren, miteinander verbundenen und ineinander übergehenden Abschnitten 24a, 24b, 24c, 24d auf.

Die Druckausgleichsvorrichtung 10 dient zum Ausgleichen eines Innendrucks in einem Gehäuse 26 einer elektrochemischen Vorrichtung, insbesondere einer Batterie, deren Innenraum in der Zeichnung mit dem Bezugszeichen 28 bezeichnet ist. Die Umgebung des Gehäuses 26 ist mit dem Bezugszeichen 30 bezeichnet.

Das Gehäuse 26 weist eine Gehäusewand 32 mit einer Gehäuseöffnung 34 auf. Der Montageabschnitt 18 des Gehäuseeinsatzes 12 ist mit einer Berandung der Gehäuseöffnung 34 verschraubt, verpresst und/oder verrastet.

Der Gehäuseeinsatz 12 weist, vorzugsweise an seinem dem Innenraum 26 zugewandten Ende angeordnet, einen Ventilsitz 36 auf (vergleiche Figur 2). Der Ventilsitz 36 erstreckt sich vorzugsweise ringförmig um die zentrale Achse 14 herum und bildet gleichzeitig eine Begrenzungsfläche des Innenraumabschnitts 24d.

Der Ventilsitz 36 wirkt mit einer Dichtung 38 (vergleiche Figur 1) eines insgesamt mit dem Bezugszeichen 40 bezeichneten Ventilkörpers zusammen. Der Ventilkörper 40 ist längs der zentralen Achse 14 bewegbar. Der Ventilkörper 40 weist auf seiner dem Innenraum 28 des Gehäuses 26 zugewandten Seite eine Dichtfläche 42 auf, welche zumindest anteilig, vorzugsweise vollständig, durch die Außenseite einer gaspermeablen Membran 44 gebildet ist. Vorzugsweise ist die gaspermeable Membran 44 kreisscheibenförmig.

Die gaspermeable Membran 44 ist durch Verklebung oder Ähnliches fest mit dem Ventilkörper 40 verbunden. Der Ventilkörper 40 weist eine mit einer Innenseite 46 der Membran 44 fluidwirksam kommunizierende Gasdurchströmungsöffnung 47 auf.

Der Ventilkörper 40 weist an seinem der Umgebung 30 des Gehäuses 26 zugewandten Ende eine Mehrzahl von entlang des Umfangs des Ventilkörpers 40 verteilt angeordneten Anschlagelementen 48 auf. Es sind beispielsweise drei mit einem Winkelabstand von 120° zueinander beabstandete Anschlagelemente 48 vorgesehen. Die Anschlagelemente 48 weisen Anschlagflächen 50 auf, welche vorzugsweise bezogen auf die Zentralachse 14 geneigt sind.

Die Anschlagflächen 50 wirken mit Abstützflächen 52 zusammen, welche durch Federarme 54 gebildet werden. Die Federarme 54 erstrecken sich im Wesentlichen parallel zu der zentralen Achse 14 und ragen von einem Ringkörper 56 ab, welcher sich an einem Absatz 58 des Gehäuseeinsatzes 12 abstützt.

Die Federarme 54 bilden eine Krafterzeugungseinrichtung 60, welche über die Flächen 52 eine Druckkraft auf die Anschlagflächen 50 des Ventilkörpers 40 ausübt und somit den Ventilkörper 40 mit seiner Dichtfläche 42 gegen einen Absatz 62 (vergleiche Figur 2) des Ventilsitzes 36 drückt.

Vorzugsweise sind der Ventilkörper 40 und die Krafterzeugungseinrichtung 60 gegen ein Verdrehen um die zentrale Achse 40 gesichert, beispielsweise mittels eines Verdrehsicherungsabschnitts 62, welcher fest mit dem Gehäuseeinsatz 12 verbunden ist. Auf diese Weise ist es möglich, dass die Anschlagelemente 48 und die Federarme 54 sich insgesamt nur über einen kleinen Teil des Umfangs des Ventilköpers 40 erstrecken müssen, sodass in Umfangsrichtung gesehen zwischen den Anschlagelementen 48 und in Umfangsrichtung zwischen den Federarmen 54 Freiräume 64 verbleiben, welche mit Gas durchströmbar sind.

Im Normalbetrieb der elektrochemischen Vorrichtung befindet sich der Ventilkörper 40 in seiner Ruhelage (vergleiche Figur 1). Der Druck im Innenraum 28 ist so niedrig, dass eine Öffnungskraft, welche sich aus Multiplikation des Innendrucks im Innenraum 28 und der Ventilfläche 42 ergibt, nicht ausreicht, um die in entgegengesetzter Richtung wirkende Kraft der Krafterzeugungseinrichtung 60 zu überwinden. In der Ruhelage des Ventilkörpers erfolgt ein Gasaustausch über die gaspermeable Membran 44 hinweg, um einen Druckausgleich zwischen dem Innenraum 28 der elektrochemischen Vorrichtung und der Umgebung 30 zu ermöglichen. Dabei ist das auszutauschende Gas längs eines Gasaustauschpfads 66 geführt, im Wesentlichen parallel zu der zentralen Achse 14 des Gehäuseeinsatzes 12. Im Zuge des Gasaustauschs wird auch die Gasdurchströmungsöffnung 47 des Ventilkörpers 40 durchströmt.

Im Falle einer Störung kann es vorkommen, dass der Druck im Innenraum 28 der elektrochemischen Vorrichtung schlagartig ansteigt. Zur Vermeidung oder Minderung von Schäden ist es dann gewünscht, schnell große Gasmengen aus dem Innenraum 28 der elektrochemischen Vorrichtung in die Umgebung 30 abzuführen. Die Krafterzeugungseinrichtung 60 ist daher so ausgelegt, dass bei Erreichen eines Grenzinnendrucks die Schließkraft der Krafterzeugungseinrichtung 60 durch den an der Dichtfläche 42 anliegenden Druck und die dadurch erzeugte Öffnungskraft überwunden wird. In diesem Fall bewegt sich der Ventilkörper 40 aus seiner an dem Dichtsitz 36 anliegenden Ruhelage (vergleiche Figur 1) in eine vom Ventilsitz 36 abgehobene Gebrauchslage (vergleiche Figur 2). Im Zuge der Bewegung des Ventilkörpers 40 aus der Ruhelage in die Gebrauchslage werden die Federarme 54 mit ihren Flächen 52 nach radial außen federelastisch verformt, sodass die Anschlagflächen 50 der Anschlagelemente 48 an den Flächen 52 entlanggleiten können und sich der Ventilkörper 40 in zu der zentralen Achse 14 paralleler Richtung aus dem Ventil 36 heraus bewegt.

In der Gebrauchslage des Ventilkörpers 40 entsteht ein in Figur 2 mit dem Bezugszeichen 68 bezeichneter Strömungspfad, welcher sich von dem Gasaustauschpfad 66 des Normalbetriebs unterscheidet. Der Strömungspfad 68 führt ausgehend von dem Innenraum 28 über den Innenraumabschnitt 24d und den angrenzenden, radial erweiterten Innenraumabschnitt 24c nach radial außen um die Dichtung 38 des Ventilkörpers 40 herum, in Umfangsrichtung gesehen zwischen den Federarmen 54 und den Anschlagelementen 48 hindurch zu einem zentralen Bereich des Innenraumabschnitts 24b und schließlich über den Innenraumabschnitt 24a zur Umgebung 30.

Die Umströmung der gaspermeablen Membran 44 entlang des Strömungspfads 68 hat den Vorteil, dass in kurzer Zeit große Gasmengen abgeführt werden können. Dabei bleibt die gaspermeable Membran 44 vorzugsweise intakt.

Bei dem in der Zeichnung dargestellten Ausführungsbeispiel federn die Federarme 54 nach ihrer Auslenkung nach radial außen wieder nach radial innen zurück und stehen, wenn sich der Ventilkörper in seiner Gebrauchslage befindet, nicht mehr in Kontakt mit dem Ventilkörper 40. Es ist aber denkbar, dass die Federarme 54 so geformt sind, dass sie in Kontakt mit den Anschlagelementen 48 verbleiben und dass nach Abführung der Gasmengen und nach dem Absinken des Drucks im Innenraum 28 der Ventilkörper 40 wieder selbsttätig aus seiner Gebrauchslage in seine Ruhelage überführt wird.

Bei dem in der Zeichnung dargestellten Ausführungsbeispiel ist es möglich, den Ventilköper 40 manuell oder mit Hilfe eines Werkzeugs wieder aus der Gebrauchslage (vergleiche Figur 2) in die Ruhelage (vergleiche Figur 1) zu drücken. Der Zugang kann in einfacher Weise über den Innenraumabschnitt 24a erfolgen.

## Patentansprüche

1. Druckausgleichsvorrichtung (10) zum Ausgleichen eines Innendrucks in einem Gehäuse (26) einer elektrochemischen Vorrichtung, umfassend mindestens eine gaspermeable Membran (44) zum Gasaustausch zwischen einem Innenraum (28) des Gehäuses (26) und einer Umgebung (30) der elektrochemischen Vorrichtung, wobei die Druckausgleichsvorrichtung (10) einen Ventilkörper (40) umfasst, welcher bei Überschreitung eines Grenzinnendrucks aus einer an einem Ventilsitz (36) anliegenden Ruhelage in eine vom Ventilsitz (36) entfernte Gebrauchslage überführbar ist, wobei der Ventilkörper (40) eine vom Innendruck beaufschlagte Ventilfläche (42) aufweist, **dadurch gekennzeichnet, dass** der Ventilkörper (40) eine mittels der gaspermeablen Membran (44) verschlossene Gasdurchströmungsöffnung (47) aufweist und die Ventilfläche (42) zumindest anteilig durch eine Oberfläche der gaspermeablen Membran (44) gebildet ist, dass in der Ruhelage des Ventilkörpers (40) Gas entlang eines Gasaustauschpfads (66) geführt ist, wobei ein Gasaustausch über die gaspermeable Membran (44) hinweg erfolgt, und dass in der Gebrauchslage des Ventilkörpers (40) Gas entlang eines vom Gasaustauschpfad (66) abweichenden, um den Ventilkörper (40) und die gaspermeable Membran (44) herum verlaufenden Strömungspfad (68) geführt ist.

2. Druckausgleichsvorrichtung (10) nach Anspruch 1,
**dadurch gekennzeichnet, dass** die Ventilfläche (42) vollständig oder im Wesentlichen vollständig durch die gaspermeable Membran (44) gebildet ist.

3. Druckausgleichsvorrichtung (10) nach einem der voranstehenden Ansprüche, **dadurch gekennzeichnet, dass** sich die gaspermeable Membran (44) in einer Membranebene erstreckt, welche zu einer Bewegungsachse (14) des Ventilkörpers (40) winklig, insbesondere senkrecht, verläuft.

4. Druckausgleichsvorrichtung (10) nach Anspruch 3,
**dadurch gekennzeichnet, dass** die gaspermeable Membran (44) und die Bewegungsachse (14) relativ zueinander konzentrisch angeordnet sind.

5. Druckausgleichsvorrichtung (10) nach einem der voranstehenden Ansprüche, **dadurch gekennzeichnet, dass** die Druckausgleichsvorrichtung (10) eine dem Innendruck entgegenwirkende Krafterzeugungseinrichtung (60) aufweist, welche den Ventilkörper (40), sofern der Grenzinnendruck nicht überschritten wird, in der Ruhelage hält.

6. Druckausgleichsvorrichtung (10) nach einem der voranstehenden Ansprüche, **dadurch gekennzeichnet, dass** die Druckausgleichsvorrichtung (10) einen Gehäuseeinsatz (12) aufweist, welcher an oder in einer Öffnung (34) des Gehäuses (26) der elektrochemischen Vorrichtung befestigbar ist.

7. Druckausgleichsvorrichtung (10) nach Anspruch 6,
**dadurch gekennzeichnet, dass** der Gehäuseeinsatz (12) einen Innenraum (24) zur Anordnung des Ventilkörpers (40) und der mit dem Ventilkörper (40) verbundenen gaspermeablen Membran (44) aufweist.

## Claims

1. Pressure compensation device (10) for compensating an internal pressure in a housing (26) of an electrochemical device, comprising at least one gas-permeable membrane (44) for gas exchange between an interior (28) of the housing (26) and surroundings (30) of the electrochemical device, wherein the pressure compensation device (10) comprises a valve body (40) which can be transferred from a home position resting on a valve seat (36) into a use position remote from the valve seat (36), wherein the valve body (40) comprises a valve surface (42) to which the internal pressure is applied, **characterized in that** the valve body (40) comprises a gas throughflow opening (47) that is sealed by the gas-permeable membrane (44) and **in that** the valve surface (42) is formed by a surface of the gas-permeable membrane (44) at least in part, and **in that**, when the valve body (40) is in the home position, gas is guided along a gas-exchange path (66), wherein a gas exchange takes place through the gas-permeable membrane (44), and **in that**, when the valve body (40) is in the use position, gas is guided along a flow path (68) which differs from the gas exchange path (66) and which extends around the valve body (40) and the gas-permeable membrane (44).

2. Pressure compensation device (10) according to claim 1, **characterized in that** the valve surface (42) is entirely or substantially entirely formed by the gas-permeable membrane (44).

3. Pressure compensation device (10) according to any of the preceding claims, **characterized in that** the gas-permeable membrane (44) extends in a membrane plane which extends at an angle, in particular perpendicularly, to a movement axis (14) of the valve body (40).

4. Pressure compensation device (10) according to claim 3, **characterized in that** the gas-permeable membrane (44) and the movement axis (14) are arranged concentrically relative to one another.

5. Pressure compensation device (10) according to any of the preceding claims, **characterized in that** the pressure compensation device (10) comprises a pressure generating mechanism (60) which counteracts the internal pressure and holds the valve body (40) in the home position, provided that the internal limiting pressure is not exceeded.

6. Pressure compensation device (10) according to any of the preceding claims, **characterized in that** the pressure compensation device (10) comprises a housing insert (12) which can be fastened on or in an opening (34) of the housing (26) of the electrochemical device.

7. Pressure compensation device (10) according claim 6, **characterized in that** the housing insert (12) comprises an interior (24) for arranging the valve body (40) and the gas-permeable membrane (44) that is connected to the valve body (40).

## Revendications

1. Dispositif de compensation de pression (10) destiné à compenser une pression interne dans un boîtier (26) d'un dispositif électrochimique, comprenant au moins une membrane perméable au gaz (44) pour l'échange gazeux entre un espace intérieur (28) du boîtier (26) et un environnement (30) du dispositif électrochimique, dans lequel le dispositif de compensation de pression (10) comprend un corps de soupape (40), lequel, lorsqu'une pression interne limite est dépassée, peut être amené d'une position de repos en appui sur un siège de soupape (36) dans une position d'utilisation éloignée du siège de soupape (36), dans lequel le corps de soupape (40) présente une surface de soupape (42) sollicitée par la pression interne, **caractérisé en ce que** le corps de soupape (40) présente un orifice de traversée gazeuse (47) fermé au moyen de la membrane perméable au gaz (44) et la surface de soupape (42) est formée au moins en partie par une surface de la membrane perméable au gaz (44), que, dans la position de repos du corps de soupape (40), du gaz est guidé le long d'une voie d'échange de gaz (66), dans lequel un échange de gaz s'effectue au-delà de la membrane perméable au gaz (44), et que, dans la position d'utilisation du corps de soupape (40), le gaz est guidé le long d'une voie d'écoulement (68) différente de la voie d'échange de gaz (66), s'étendant autour du corps de soupape (40) et de la membrane perméable au gaz (44).

2. Dispositif de compensation de pression (10) selon la revendication 1, **caractérisé en ce que** la surface de soupape (42) est formée entièrement ou sensiblement entièrement par la membrane perméable au gaz (44).

3. Dispositif de compensation de pression (10) selon l'une quelconque des revendications précédentes, **caractérisé en ce que** la membrane perméable au gaz (44) s'étend dans un plan de membrane, lequel s'étend de manière angulaire, en particulier perpendiculaire, par rapport à un axe de mouvement (14) du corps de soupape (40).

4. Dispositif de compensation de pression (10) selon la revendication 3, **caractérisé en ce que** la membrane perméable au gaz (44) et l'axe de mouvement (14) sont disposés de manière concentrique l'une par rapport à l'autre.

5. Dispositif de compensation de pression (10) selon l'une quelconque des revendications précédentes, **caractérisé en ce que** le dispositif de compensation de pression (10) présente un dispositif de génération de force (60) agissant à l'encontre de la pression interne, lequel maintient le corps de soupape (40), dans la mesure où la pression interne limite n'est pas dépassée, dans la position de repos.

6. Dispositif de compensation de pression (10) selon l'une quelconque des revendications précédentes, **caractérisé en ce que** le dispositif de compensation de pression (10) présente un insert de boîtier (12), lequel peut être fixé sur ou dans une ouverture (34) du boîtier (26) du dispositif électrochimique.

7. Dispositif de compensation de pression (10) selon la revendication 6, **caractérisé en ce que** l'insert de boîtier (12) présente un espace intérieur (24) pour la disposition du corps de soupape (40) et de la membrane perméable au gaz (44) reliée au corps de soupape (40).
